# FASCICULE DE BREVET EUROPEEN

(11) **EP 1 645 465 B1**
(45) Date de publication et mention de la délivrance du brevet: **28.03.2007**
(21) Numéro de dépôt: 05292044.4
(22) Date de dépôt: 30.09.2005
(51) Int. Cl.: B60Q 1/04, B62D 65/16

(54) **Système de montage d'un projecteur sur un véhicule automobile et véhicule automobile comportant un tel système**
System zur Montage eines Scheinwerfers an einem Fahrzeug und Fahrzeug mit einem solchen Montagesystem
System for mounting a headlamp in a vehicle and vehicle with such a mounting system

(30) Priorité: 05.10.2004 FR 0410507
(43) Date de publication de la demande: 12.04.2006
(73) Titulaire: VALEO VISION, 93012 Bobigny Cédex (FR)
(72) Inventeur: Baert, Christophe, 49460 Montreuil Juigne (FR); Bakacha, Malik, 44370 Belligne (FR)

(56) Documents cités:
- EP-A- 0 422 405
- EP-A- 0 933 253
- EP-A- 1 024 075
- EP-A- 1 103 417
- DE-A1- 19 955 648

## Description

### Domaine de l'invention

La présente invention concerne un système de montage d'un projecteur sur un véhicule automobile permettant de déplacer le projecteur par rapport au véhicule lors d'une collision frontale avec un obstacle. Ce système de montage permet, en particulier, une rotation du projecteur par rapport au véhicule.

L'invention trouve des applications dans le domaine des véhicules automobiles et, notamment, dans le domaine de la sécurité des piétons et de la sécurité des véhicules automobiles en cas de collision frontale ou de collision avec un piéton.

### Etat de la technique

Dans le domaine de l'automobile, on cherche de plus en plus à protéger le véhicule en cas de collision avec un obstacle pour préserver au maximum l'habitacle du véhicule ainsi que son environnement moteur afin de réduire le coût des réparations.. Cette collision avec un obstacle peut être un choc piéton ou un choc frontal. Le choc frontal est une collision du véhicule, à différentes vitesses et selon différents angles, avec un obstacle fixe ou en mouvement. Le choc piéton est une collision avec un piéton adulte ou enfant à différentes vitesses.

Par ailleurs, une nouvelle directive européenne a été établie visant à protéger le piéton lors d'un choc entre un piéton et un véhicule ou une partie de ce véhicule, en particulier un projecteur de véhicule.

Actuellement, il est connu d'utiliser, dans certains véhicules, un projecteur maintenu au véhicule automobile par des pattes de fixation. Ces pattes de fixation sont prévues pour se casser lors d'un choc frontal, ou d'un choc piéton, de façon à désolidariser le projecteur du véhicule.

Deux cas peuvent alors se présenter. Dans le cas d'un choc à vitesse faible avec un obstacle ou un piéton, le projecteur recule sur une faible distance, et il peut être réparé à faible coût si ses pattes de fixation sont remplaçables. Les blessures causées au piéton sont alors généralement sans gravité.

Dans le cas d'un choc à vitesse plus élevée avec un obstacle ou un piéton, le projecteur est plus gravement endommagé, de même que l'environnement moteur sous le fait de l'impact du projecteur. Les blessures infligées au piéton peuvent alors être sérieuses

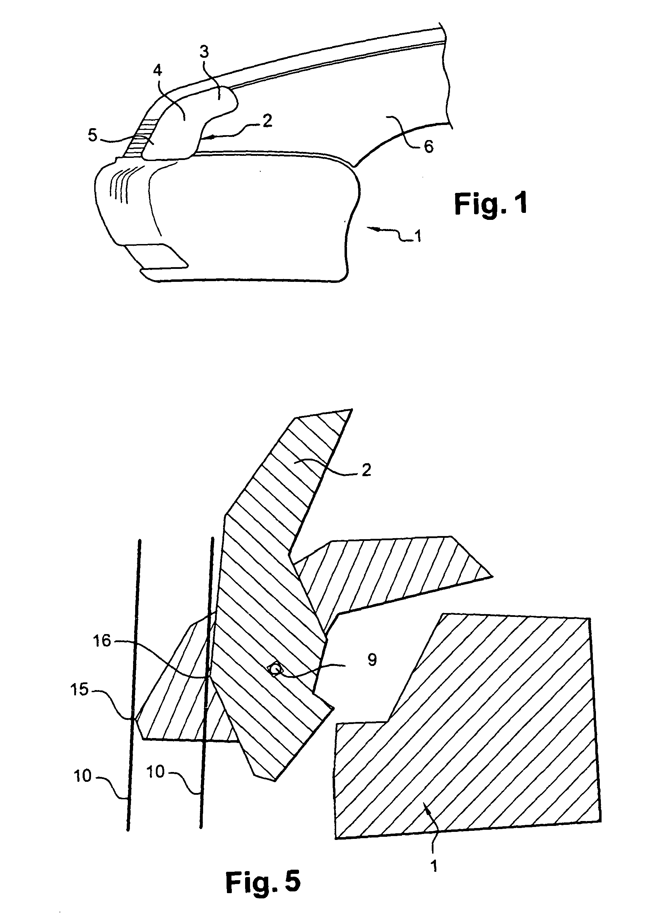

On connaît, par ailleurs, des projecteurs qui, au lieu d'être désolidarisés du véhicule, lors d'un choc frontal ou d'un choc piéton, se déplacent le long du véhicule. Un tel projecteur de véhicule est décrit dans le document EP-A-1-1 346 874. Un exemple de ce projecteur est représenté sur la figure 1. Plus précisément, la figure 1 représente l'avant d'un véhicule 1 équipé d'un projecteur 2. Ce projecteur 2 émet un faisceau lumineux dirigé essentiellement vers l'avant du véhicule 1, c'est-à-dire selon l'axe de la route. Ce projecteur 2 comporte un boîtier, non représenté sur la figure 1, fermé par une glace de protection 3 formant la face de sortie du projecteur 2. Le projecteur 2 comporte deux zones :
- une zone centrale 4 formant la partie la plus flexible du projecteur 2 puisqu'elle comporte la glace de protection ; cette zone centrale 4 est aussi appelée zone frontale.
- une zone latérale 5, entourant la zone frontale 4. Cette zone latérale 5 comporte une partie du boîtier.

Le projecteur 2 comporte également des pattes de fixation, ou organes de liaison, assurant un déplacement du projecteur 2 vers l'arrière du véhicule 1, lors d'un choc frontal ou d'un choc piéton. Les organes de liaison comportent deux moyens de guidage différents assurant, respectivement, un coulissement du projecteur 2 vers l'arrière et vers le côté de l'aile 6 du véhicule 1. Le coulissement du projecteur 2 vers l'arrière du véhicule 1 et le coulissement du projecteur 2 vers le côté de l'aile 6 du véhicule 1 sont deux déplacements linéaires, combinés.

Le déplacement du projecteur 2 vers le coté de l'aile 6 du véhicule 1 permet un dégagement du projecteur 2. Cependant, ce dégagement vers le coté de l'aile 6 du projecteur 2 provoque une collision du projecteur 2 contre le bord de l'aile 6 du véhicule. Le projecteur 2 termine alors son déplacement dans l'environnement moteur du véhicule. Autrement dit, le projecteur 2 s'écrase contre un ou plusieurs des éléments de l'environnement moteur du véhicule 1, créant ainsi de nombreux dégâts dans l'environnement moteur du véhicule 1, en plus de la démolition de l'aile 6 du véhicule 1.

Le déplacement du projecteur 2 vers l'arrière du véhicule 1 permet d'absorber une partie de l'énergie générée par le choc, car ce déplacement est limité par l'environnement moteur du véhicule. Cependant, cette absorption d'énergie n'est pas suffisante pour satisfaire à la nouvelle norme ; la protection du piéton n'est pas suffisamment assurée.

De plus, la cinématique de coulissement du projecteur 2 comporte, en cas de choc piéton, un risque important de blesser le piéton. En effet, lors d'un choc piéton, le coulissement du projecteur 1 vers l'arrière du véhicule propulse le piéton sur la zone latérale 5 du projecteur 2, qui est une zone rigide dudit projecteur, donc dangereuse pour le piéton.

### Exposé de l'invention

L'invention a justement pour but de remédier aux inconvénients des techniques évoquées précédemment. A cette fin, l'invention propose un système de montage d'un projecteur sur un véhicule automobile, dans lequel, lors d'un choc piéton, le projecteur est déplacé en rotation autour d'un centre de rotation choisi. Le projecteur comporte un premier élément de liaison et le véhicule automobile comporte un second élément de liaison. Ces éléments de liaisons sont incurvés et adaptés l'un à l'autre pour assurer la rotation du projecteur lors d'un choc frontal ou d'un choc piéton.

De façon plus précise, l'invention concerne un système de montage d'un projecteur sur un véhicule automobile, ce projecteur comportant un boîtier rigide fermé par une glace de protection, ledit système comportant :
- un premier élément de liaison fixé sur le projecteur,
- un second élément de liaison fixé sur le véhicule,
- le premier et le second éléments de liaison et étant assemblés de façon à glisser l'un dans l'autre,
caractérisé en ce que le premier et le second éléments de liaison sont incurvés et montés au moins partiellement autour d'un centre de rotation du projecteur, assurant un déplacement rotatif au projecteur lors d'une collision.

L'invention peut également comporter une ou plusieurs des caractéristiques suivantes :
- une position du centre de rotation du projecteur est déterminée en fonction d'une forme de la glace de protection du projecteur.
- la position du centre de rotation est déterminée en fonction d'une position optimale du projecteur à la fin de son déplacement.
- le centre de rotation du projecteur est centré sur le centre de gravité dudit projecteur.
- le premier élément de liaison est fixé sur une zone latérale du projecteur.
- le second élément de liaison forme un chemin de guidage et le premier élément de liaison est un élément guidé par le chemin de guidage.
- le chemin de guidage et l'élément guidé comportent au moins un moyen de freinage mécanique.
- le chemin de guidage a une forme crénelée et l'élément guidé a une forme en T, adaptée à s'insérer successivement entre des créneaux du chemin de guidage.
- le chemin de guidage a une forme effilée et l'élément guidé a une forme effilée, adaptée à s'insérer dans le chemin de guidage.
- le système de montage comporte une rampe de glissement du projecteur sous un bord tombé d'une aile du véhicule.
- la rampe est montée sur la glace de protection du projecteur.
- la rampe est fixée sur le boîtier du projecteur.
- une pièce est placée à une extrémité de la rampe.
- la rampe est facettée dans la glace de protection du projecteur.

L'invention concerne également un véhicule automobile comportant au moins un projecteur monté sur le véhicule automobile au moyen d'un système de montage selon l'invention.

### Brève description des dessins

La figure 1, déjà décrite, représente l'avant d'un véhicule automobile équipé d'un projecteur.
La figure 2, la figure 3 et la figure 4 représentent schématiquement le système de l'invention à différentes phases de déplacement du projecteur 2.
La figure 5 représente schématiquement un exemple d'une position du centre de rotation du projecteur.
La figure 6 représente schématiquement une position du centre de rotation par rapport au centre de gravité du projecteur.
La figure 7 et la figure 8 représentent, respectivement, un premier et un second modes de réalisation des éléments de liaison de l'invention.
La figure 9, la figure 10 et la figure 11 représentent une rampe de glissement du projecteur sous un bord tombé de l'aile du véhicule.
La figure 12, la figure 13 et la figure 14 représentent, respectivement, un deuxième, un troisième et un quatrième modes de réalisation de la rampe de glissement.

### Description détaillée de modes de réalisation de l'invention

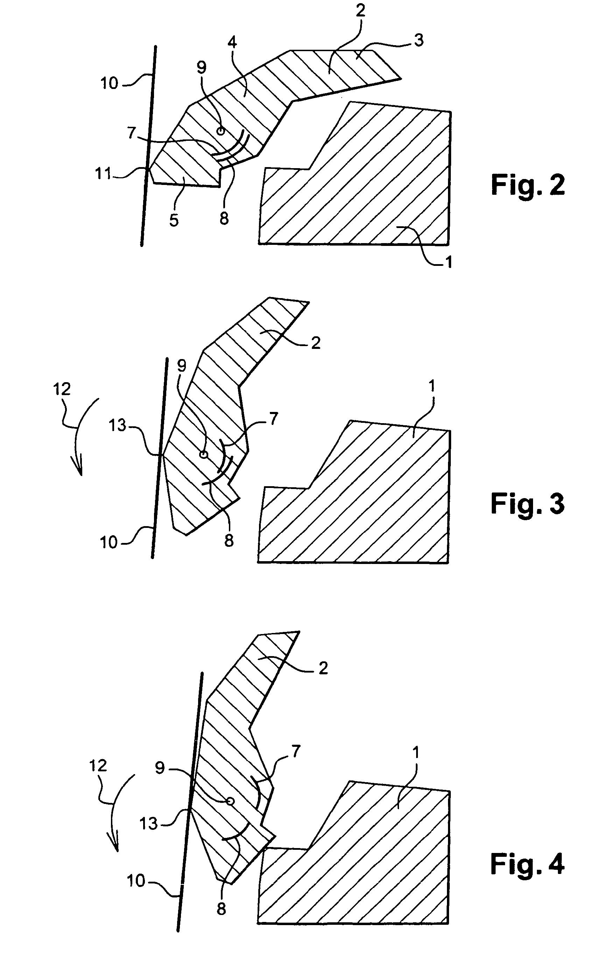

L'invention concerne un système de montage d'un projecteur sur un véhicule automobile permettant une rotation du projecteur par rapport au véhicule, lors d'une collision. Un exemple d'un système de montage, selon l'invention, est représenté sur la figure 2. Cette figure 2 montre un projecteur, un véhicule et le système de montage du projecteur sur le véhicule de façon très schématisé.

Pour mieux comprendre, tout au long de la description, la cinématique de rotation du projecteur, selon l'invention, le véhicule et le projecteur sont schématisés sur les figures 2 à 7, en deux blocs. Un premier bloc représente le véhicule 1 et un second bloc représente le projecteur 2. Le système de montage est représenté sur le second bloc, par mesure de simplification.

Le projecteur 2 est fixé au véhicule 1 par le système de montage de l'invention. Ce système de montage comporte deux éléments de liaison 7 et 8. Le premier élément de liaison 7 est monté sur le projecteur 2 dans la zone latérale 5 du projecteur. On appelle zone latérale, une zone du projecteur 2 comportant le boîtier rigide du projecteur 2. Le deuxième élément de liaison 8 est monté le véhicule 1, par exemple, sur le châssis du véhicule.

Les éléments de liaisons 7 et 8 ont des structures adaptées pour coulisser l'une dans l'autre. L'élément de liaison 8 est un dispositif de guidage permettant de supporter et de guider l'élément de liaison 7. Il constitue un chemin de guidage, pour l'élément de liaison 7. L'élément de liaison 8 peut être, par exemple, un rail. L'élément de liaison 8 peut aussi être une coulisse ou toute autre structure permettant le coulissement de l'élément de liaison 7.

L'élément de liaison 7 est un élément guidé, adapté pour coulisser dans l'élément de liaison 8. Cet élément de liaison 7 peut être, par exemple, une glissière.

L'élément de liaison 7 et l'élément de liaison 8 peuvent être de longueur identique, comme montré sur la figure 2. L'élément de liaison 7, ou l'élément guidé 7, peut aussi avoir une longueur plus petite que l'élément de liaison 8, ou le rail 8.

Le rail 8 et l'élément guidé 7 ont une forme incurvée, ou circulaire, assurant un déplacement circulaire à l'élément guidé 7. Le rail 8 est fixé sur le véhicule 1 de sorte que le projecteur 2 est mobile par rapport au véhicule 1. Le déplacement de l'élément guidé 7, dans le rail 8, entraîne automatiquement un mouvement de rotation du projecteur 2.

L'élément guidé 7 et le rail 8 sont montés au moins partiellement autour d'un centre de rotation 9 du projecteur 2. Ce centre de rotation 9 est défini par simulation et/ou expérimentation pour une rotation optimale du projecteur 2. En position normale, c'est-à-dire hors choc, le rail 8 et l'élément guidé 7 sont circonscrits, le rail 8 étant extérieur à l'élément guidé 7.

Autrement dit, l'élément guidé 7 et le rail 8 forment des arcs de cercle montés autour du centre de rotation 9. Le centre de rotation 9 forme donc le centre de cercles passant par l'élément guidé 7 et le rail 8, la distance entre le centre de rotation 9 et le rail 8 étant supérieure à la distance entre le centre de rotation 9 et l'élément guidé 7.

Dans une variante de l'invention, l'élément guidé 7 et le rail 8 sont fixés l'un à l'autre par des moyens de fixation détachables, c'est-à-dire aptes à se détacher ou se briser, en cas de choc. Ainsi, en fonctionnement normal, le projecteur 2 est immobile par rapport au véhicule 1. En cas de choc, les moyens de fixations se détachent, permettant le glissement de l'élément de liaison 7 dans le rail 8.

Les figures 2, 3 et 4 montrent la cinématique d'un véhicule 1 entrant en collision avec un impacteur 10. Cet impacteur 10 représente un piéton ou tout autre objet entrant en collision avec le véhicule 1 de manière frontale. Tout au long de la description, on considérera l'impacteur 10 comme étant un piéton, en sachant qu'il peut s'agir de tout autre obstacle frontal. L'impacteur 10 est représenté sur les figures 2, 3, 4 par un trait plein sensiblement incliné

Lors d'un choc frontal, l'impacteur 10 entre en contact avec une surface 11 de la zone latérale 5 du projecteur 2. L'intensité de la force de collision entre l'impacteur 10 et le projecteur 2 provoque la cassure des moyens de fixation de l'élément guidé 7 sur le rail 8, dans le cas où il existe de tels moyens de fixation.

La force de collision, au moment de l'impact, entraîne un déplacement de l'élément guidé 7 sur le rail 8, comme montré sur la figure 3. Ce déplacement de l'élément guidé 7 sur le rail 8 entraîne le basculement du projecteur 2 par rapport au véhicule 1. Ce basculement du projecteur 2 correspond à un mouvement de rotation du projecteur 2 autour du centre de rotation 9. Ce mouvement rotatif est effectué suivant un sens de rotation 12 défini à la conception du projecteur 2.

La rotation du projecteur 2 a pour effet de déplacer la surface 11 d'impact de l'impacteur 10. Cette surface 11 se déplace vers la zone centrale 4, ou zone frontale, du projecteur 2, c'est-à-dire vers la zone la plus flexible du projecteur 2 puisqu'il s'agit du centre de la glace de protection 3. La surface d'impact 11 déplacée est nommée et référencée " surface d'impact 13 ". Cette rotation du projecteur 2 dégage ledit projecteur vers le côté de l'aile du véhicule 1 permettant ainsi au projecteur 2 de ne pas heurter l'environnement moteur du véhicule 1 au cours de sa rotation.

La position finale du projecteur 2 par rapport à l'impacteur 10 et au véhicule 1 à la fin du déplacement de l'élément guidé 7 sur le rail 8, est montré sur la figure 4. La fin du déplacement de l'élément guidé 7 sur le rail 8 entraîne la fin de la rotation du projecteur 2 autour du centre de rotation 9. Ce déplacement se termine lorsque l'élément guidé 7 atteint une butée sur le rail 8, ou lorsque l'élément guidé 7 sort du rail 8, comme montré sur la figure 4.

En fin de rotation, la surface d'impact 13 se trouve sur la zone frontale 4 de la glace de protection 3. Cette surface 13 est la surface finale d'impact de l'impacteur 10 sur le projecteur 2. Cette surface finale 13 est une zone flexible du projecteur 2, donc une zone moins dangereuse pour le piéton, lorsqu'il s'agit d'un choc piéton.

En outre, la rotation du projecteur 2 absorbe une partie de l'énergie générée par la collision entre l'impacteur 10 et le véhicule 1. Cette absorption d'énergie a pour effet de diminuer de manière sensible l'énergie reçue par l'impacteur 10, en particulier, lorsque l'impacteur 10 représente un piéton. La sécurité du piéton s'en trouve améliorée. Par ailleurs, cette rotation du projecteur 2 permet que le projecteur n'entre pas, avec toute la force du choc, dans le véhicule 1. Le moteur du véhicule 1, qui est l'un des éléments les plus chers du véhicule 1, ainsi que l'environnement moteur, se trouvent ainsi protégés. Les dégâts du véhicule 1 sont donc limités et les coûts de réparation du véhicule 1 sont considérablement diminués.

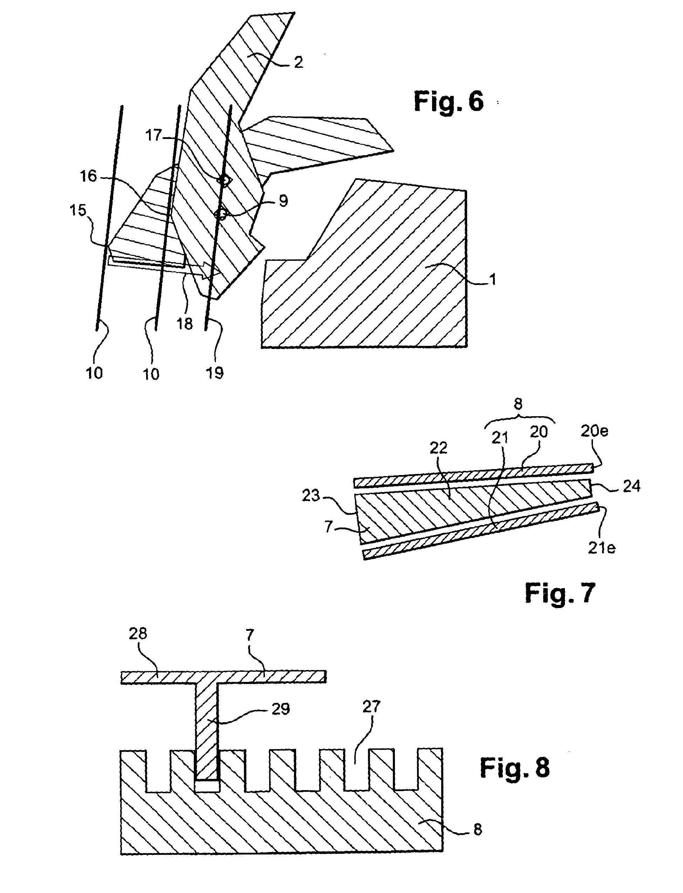

Comme expliqué précédemment, la rotation du projecteur 2 est établie autour du centre de rotation 9. Ce centre de rotation 9 est défini en fonction de la position finale optimale du projecteur 2 par rapport à l'impacteur 10. Autrement dit, la position du centre de rotation 9 est prédéfinie pour chaque projecteur en fonction, notamment, de la position normale du projecteur 2 sur le véhicule 1 et de la position finale voulue après rotation. Des exemples de définition du centre de rotation 9 sont montrés sur les figures 5 et 6.

La figure 5 montre le centre de rotation 9 du projecteur 2 par rapport à différentes positions de l'impacteur 10. Le centre de rotation 9 est déterminé à la conception du projecteur 2, il peut être choisi en tout point du projecteur 2. Le choix du centre de rotation 9 est, de préférence, réalisé par simulation et optimisation. Il est défini en tenant compte de la forme du projecteur 2 et de celle du véhicule 1. Il est défini aussi en fonction d'une position initiale du projecteur 2 et d'une position finale optimale du projecteur sur l'impacteur 10. La position initiale est la position dans laquelle se trouve le projecteur 2, en fonctionnement normal. Dans l'exemple de la figure 5, la zone d'impact 15 est choisie comme position initiale. La position finale correspond à la position du projecteur 2 contre l'impacteur 10, en fin de choc. De préférence, on choisit comme position finale la zone frontale 4 du projecteur 2. La position finale est représentée, sur la figure 5, par la surface d'impact 16.

Le centre de rotation 9 peut aussi être mobile. Dans ce cas, la position du centre de rotation 9 dépend de l'intensité de la force de collision entre le véhicule 1 et l'impacteur 10 ainsi que des positions initiale et finale du projecteur 2 par rapport à l'impacteur 10.

Dans une variante, le centre de rotation 9 est centré sur le centre de gravité du projecteur 2, entraînant la transformation de l'énergie de translation en énergie de rotation de façon optimale.

Dans une autre variante, le centre de rotation 9 est différent du centre de gravité, comme montré sur la figure 6. En effet, la figure 6 montre une position optimale du centre de rotation 9, dans le cas où le centre de rotation 9 n'est pas le centre de gravité 17 du projecteur 2.

Le centre de rotation 9 est choisi de façon à être aligné avec le centre de gravité 17. Cet alignement est représenté par une droite 19. Cette droite 19 est, de préférence, parallèle à l'impacteur 10 en position initiale et à l'impacteur 10 en position finale. Elle est perpendiculaire à la force d'impact 18, représentative de l'énergie générée lors du choc entre le véhicule 1 et l'impacteur 10. Le centre de rotation 9 peut être n'importe quel point de la droite 19. Le centre de rotation 9 est aussi choisi en fonction de la distance entre la force d'impact 18 et le centre de rotation 9 et la distance entre le centre de gravité 17 et le centre de rotation 9. La rotation du projecteur 2 est optimisée lorsque la distance de la force d'impact 18 au centre de rotation 9 est supérieure à la distance du centre de gravité 17 au centre de rotation 9.

Comme expliqué précédemment, la rotation du projecteur 2 entraîne une absorption, par le projecteur, d'une partie de l'énergie générée par la collision du véhicule 1 avec l'impacteur 10. Autrement dit, une partie de l'énergie générée par la collision est dissipée dans le projecteur 2 en rotation. Pour augmenter encore cette dissipation d'énergie, l'élément guidé 7 et le rail 8 comportent des structures de freinage mécanique. Ces structures de freinage mécanique permettent de ralentir le mouvement de rotation du projecteur 2, absorbant ainsi une partie de l'énergie de la collision.

La figure 7 montre un premier mode de réalisation de ce système de freinage. Dans ce mode de réalisation, le rail 8 comporte deux barres de structures 20 et 21 rectilignes, non parallèles, susceptibles de former à leurs extrémités 20e et 21e un angle non droit. Le rail 8 a donc une forme effilée. L'élément guidé 7 comporte une pièce 22 effilée, dont la forme est adaptée pour s'insérer entre les barres 20 et 21 du rail 8. La pièce 22 de l'élément guidé 7 a une largeur dégressive d'une extrémité 23 à une extrémité 24.

Dans ce système de freinage, les barres 20 et 21 du rail 8 reçoivent la pièce 22 de l'élément guidé 7. Dans une variante, l'élément guidé 7 et le rail 8 sont réalisés dans des matériaux flexibles. Ces matériaux flexibles ont la propriété de reprendre, partiellement ou totalement, leur forme et leur volume, après les avoir perdus par compression ou par extension. La pièce 22 de l'élément guidé 7 constitue alors une membrane déformable qui transmet aux barres 20 et 21 du rail 8, la force d'impact reçue par le véhicule 1 lors de la collision avec l'impacteur 10. La forme effilée du rail 8 ralentit le déplacement de l'élément guidé 7 sur le rail 8, entraînant un ralentissement du mouvement de rotation du projecteur 2.

Un autre mode de réalisation du système de freinage est montré sur la figure 8. Dans ce mode de réalisation, le rail 8 a une forme crénelée, c'est-à-dire qu'il comporte plusieurs créneaux 27. L'élément guidé 7 a une forme en T destinée à s'enchâsser sur le rail 8. Pour cela, l'élément guidé 7 comporte une branche 28 et une branche 29, perpendiculaire à la branche 28. La branche 29 a une longueur adaptée à la hauteur des créneaux 27 du rail 8.

Lors de la collision du véhicule 1 avec l'impacteur 10, l'élément guidé 7 se déplace sur le rail 8 par ruptures successives. Autrement dit, sous l'effet de la force d'impact, la branche 29 saute d'un créneau 27 à un autre créneau, chaque saut absorbant un peu d'énergie.

Le déplacement de l'élément guidé 7 sur le rail 8, par ruptures successives, provoque donc le ralentissement du mouvement de rotation du projecteur 2.

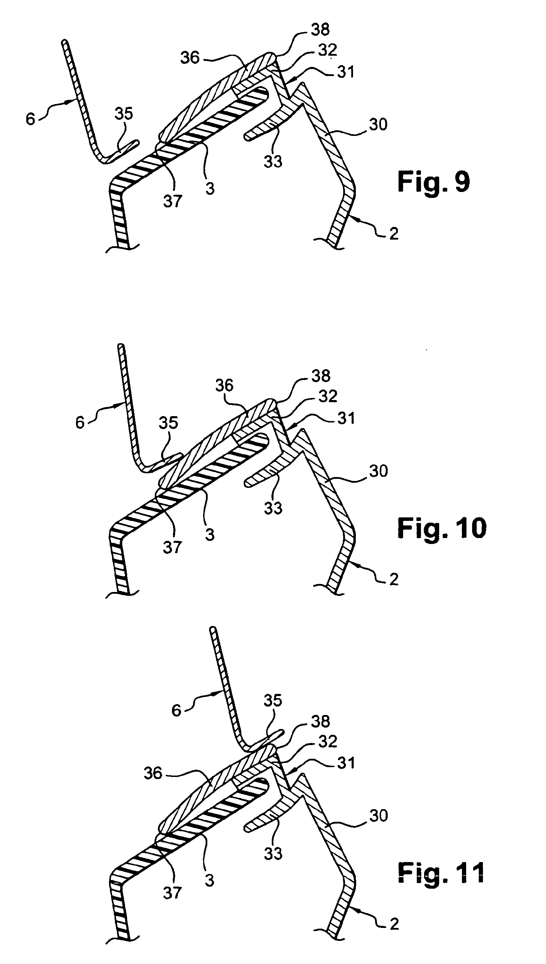

Dans un mode de réalisation de l'invention, une rampe de glissement est prévue pour assurer le dégagement du projecteur 2 vers l'aile 6 du véhicule 1, sans détériorer l'aile ni la doublure de cette aile. Ce mode de réalisation est représenté sur les figures 9 à 11 montrant la cinématique du système lors d'une collision.

Plus précisément, la figure 9 représente l'aile 6 du véhicule et un exemple de projecteur 2 équipé d'une rampe 36 de glissement. Comme la plupart des projecteurs actuels, le projecteur 2 comporte une barre 30 rigide, par exemple en métal. Cette barre 30 comporte à son extrémité une pièce 31 en forme de U, comportant une jambe 32 et une jambe 33. La jambe 33 est située entre la glace de protection 3 et la barre 30. La jambe 32 est située dans l'environnement moteur du véhicule. La glace de protection 3 est généralement encastrée dans l'espace formé par les jambes 32 et 33.

L'aile 6 du véhicule comporte une extrémité 35 emboutie en forme de L. Cette extrémité constitue le bord tombé de l'aile. En position normale du projecteur 2, l'extrémité 35 est écartée de la jambe 32.

Lors de la collision du véhicule avec l'impacteur, le projecteur 2, par un mouvement de rotation décrit précédemment, est dégagé vers le côté de l'aile 6 du véhicule. Lors de la rotation dudit projecteur, la jambe 32 peut heurter le bord tombé 35 de l'aile 6 du véhicule, entraînant alors la déformation de l'aile 6.

La rampe 36 de glissement de l'invention, réalisée par exemple en matériau plastique, permet de faire glisser la jambe 32 sous le bord tombé 35 de l'aile 6. Pour cela, la rampe 36 est fixée dans la zone latérale 5 du projecteur 2, sur la jambe 32 de la pièce 31. La rampe 36 forme un plan incliné, entre, extrémité 37 et une extrémité 38, permettant à ladite rampe de glisser sous le bord tombé 35 de l'aile 6.

La forme inclinée de la rampe 36 impose le sens de déplacement du projecteur 2 sous le bord tombé 35 de l'aile 6, comme le montre la figure 10. La rotation du projecteur 2 provoque le contact de l'extrémité 37 de la rampe 36 avec le bord tombé 35 de l'aile 6. L'extrémité 37 est adaptée pour s'insérer sous le bord tombé 35, de sorte que la rampe 36 glisse sous ledit bord tombé 35, évitant tout heurt entre le bord tombé 35 et la jambe 32.

La figure 11 montre le projecteur 2 à la fin de son déplacement sous le bord tombé 35 de l'aile 6. L'inclinaison de la rampe 36 a permis le glissement de la jambe 32 sous le bord tombé 35 de l'aile 6. Il y a donc, entre la jambe 32 et le bord tombé 35 de l'aile 6, un espace de protection comportant la rampe 36. Ainsi, lors d'une collision, la jambe 32 de la pièce 31 ne heurte pas le bord tombé 35 de l'aile 6 quel que soit le type de projecteur.

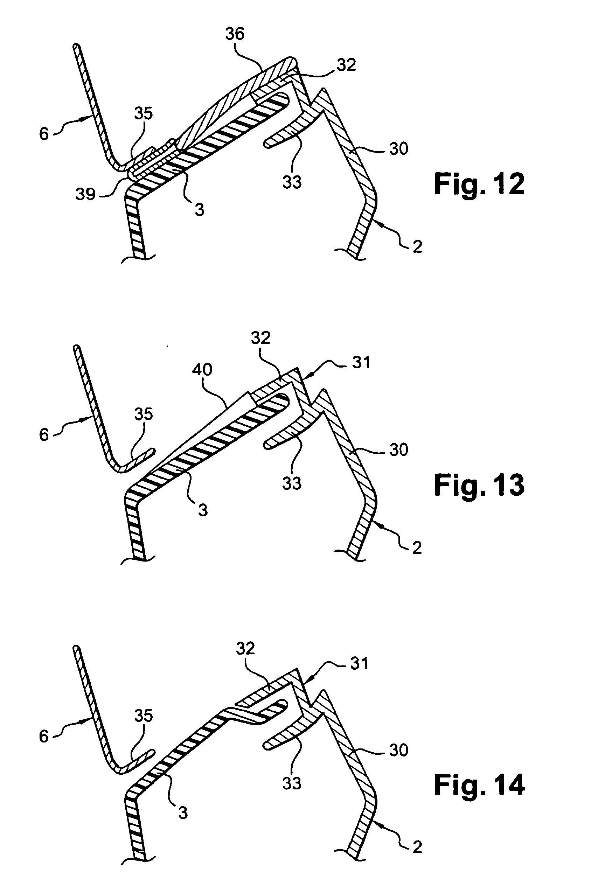

Dans une seconde variante, représentée sur la figure 12, une pièce 39 est fixée sur la glace de protection 3. Cette pièce 39, par exemple réalisée dans un matériau plastique, est fixée à l'extrémité 37 de la rampe 36, par exemple, par surmoulage. Cette pièce 39 forme une lame de ressort, située au pied de la rampe 36. Ainsi, en position normale le bord tombé 35 de l'aile 6 est en appui sur la pièce 39, comprimant ladite pièce 39. Cette compression de la pièce 39 permet au bord tombé 35 d'être placé sur le même niveau que l'extrémité 37 de la rampe 36. Lors du glissement de la pièce 39 sous le bord tombé 35 de l'aile 6, la pièce 39 se décompresse.

La figure 13 montre une troisième variante de la rampe 36. Dans cette variante, une bosse 40 est fixée sur la glace de protection 3. Cette bosse 40 est située entre la jambe 32 de la pièce 31 et le bord tombé 35 de l'aile 6. La bosse 40 est formée par un plan incliné de même niveau que la jambe 32. Ainsi, lorsque la jambe a glissé sous le bord tombé 35, ledit bord tombé est en appui sur ladite jambe 32. La bosse 40 remplit les mêmes fonctions que la rampe 36.

La figure 14 montre une quatrième variante de la rampe 36. Dans cette variante, la glace de protection 3 a une forme spécifique en forme de rampe. Dans ce cas, la glace 3 est facettée afin de former une rampe. Dans ce mode de réalisation, c'est la glace 3 elle-même qui constitue la rampe. Cette variant a l'avantage de ne pas nécessiter d'opération de fabrication supplémentaire, la rampe étant réalisée en même temps que la glace de protection.

Quelle que soit la variante, la rampe 36 aide au dégagement du projecteur 2 du coté de l'aile 6 lors d'un choc avec un impacteur. Qu'elle soit ajoutée ou réalisée par la modification de la forme de la glace de protection 3, la rampe 36 provoque la déportation du projecteur 2 évitant ainsi à l'aile 6 d'être endommagée.

## Revendications

1. Système de montage d'un projecteur (2) sur un véhicule (1) automobile, ce projecteur (2) comportant un boîtier rigide (30) fermé par une glace de protection (3), ledit système comportant :
- un premier élément de liaison fixé (7) sur le projecteur (2),
- un second élément de liaison fixé (8) sur le véhicule (1),
- le premier et le second éléments de liaison (7) et (8) étant assemblés de façon à glisser l'un dans l'autre,
**caractérisé en ce que** le premier (7) et le second (8) éléments de liaison sont incurvés et montés au moins partiellement autour d'un centre de rotation (9) du projecteur (2), assurant un déplacement rotatif au projecteur (2) lors d'une collision.

2. Système selon la revendication 1, **caractérisé en ce qu**'une position du centre de rotation (9) du projecteur (2) est déterminée en fonction d'une forme de la glace de protection (3) du projecteur (2).

3. Système selon l'une quelconque des revendications 1 et 2, **caractérisé en ce que** la position du centre de rotation (9) est déterminée en fonction d'une position optimale du projecteur (2) à la fin de son déplacement.

4. Système selon l'une quelconque des revendications 1 à 3, **caractérisé en ce que** le centre de rotation (9) du projecteur (2) est centré sur le centre de gravité (17) dudit projecteur (2).

5. Système selon l'une quelconque des revendications 1 à 4, **caractérisé en ce que** le premier élément de liaison (7) est fixé sur une zone latérale (5) du projecteur (2).

6. Système selon l'une quelconque des revendications 1 à 5, **caractérisé en ce que** le second élément de liaison (8) forme un chemin de guidage et le premier élément de liaison (7) est un élément guidé par le chemin de guidage.

7. Système selon la revendication 6, **caractérisé en ce que** le chemin de guidage (8) et l'élément guidé (7) comportent au moins un moyen de freinage mécanique.

8. Système selon la revendication 7, **caractérisé en ce que** le chemin de guidage (8) a une forme crénelée et l'élément guidé (7) a une forme en T, adaptée à s'insérer successivement entre des créneaux (26) du chemin de guidage (8).

9. Système selon la revendication 8, **caractérisé en ce que** le chemin de guidage (8) a une forme effilée et l'élément guidé (7) a une forme effilée, adaptée à s'insérer dans le chemin de guidage (8).

10. Système selon l'une quelconque des revendications 1 à 9, **caractérisé en ce qu**'il comporte une rampe (36) de glissement du projecteur (2) sous un bord tombé 35 d'une aile (6) du véhicule (1).

11. Système selon la revendication 10, **caractérisé en ce que** la rampe (36) est montée sur la glace de protection (3) du projecteur (2).

12. Système selon la revendication 10, **caractérisé en ce que** la rampe (36) est fixée sur le boîtier (30) du projecteur (2).

13. Système selon la revendication 12, **caractérisé en ce qu**'une pièce (39) est placé à une extrémité de la rampe (36).

14. Système selon la revendication 10, **caractérisé en ce que** la rampe (36) est facettée dans la glace de protection (3) du projecteur (2).

15. Véhicule automobile comportant au moins un projecteur (2), **caractérisé en ce qu**'il comporte un système de montage du projecteur (2) selon l'une quelconque des revendications 1 à 14.

## Claims

1. System for fitting a headlight (2) onto a motor vehicle (1), this headlight (2) comprising a rigid case (30) which is closed by protective glass (3), the said system comprising:
- a first connection element (7) which is secured to the headlight (2);
- a second connection element (8) which is secured to the vehicle (1);
- the first and second connection elements (7) and (8) being assembled such as to slide one in the other,
**characterised in that** the first (7) and second (8) connection elements are curved and are fitted at least partially around a centre of rotation (9) of the headlight (2), thus assuring rotary displacement of the headlight (2) during a collision.

2. System according to claim 1, **characterised in that** a position of the centre of rotation (9) of the headlight (2) is determined according to the shape of the protective glass (3) of the headlight (2).

3. System according to claim 1 or claim 2, **characterised in that** the position of the centre of rotation (9) is determined according to any optimal position of the headlight (2) at the end of the displacement of the latter.

4. System according to any one of claims 1 to 3, **characterised in that** the centre of rotation (9) of the headlight (2) is centred on the centre of gravity (17) of the said headlight (2).

5. System according to any one of claims 1 to 4, **characterised in that** the first connection element (7) is secured to a lateral area (5) of the spotlight (2).

6. System according to any one of claims 1 to 5, **characterised in that** the second connection element (8) forms a guide path and the first connection element (7) is an element which is guided by the guide path.

7. System according to claim 6, **characterised in that** the guide path (8) and the guided element (7) comprise at least one mechanical braking means.

8. System according to claim 7, **characterised in that** the guide path (8) has a crenelated shape and the guided element (7) is in the shape of a "T" which is designed to be inserted in succession between the notches (26) of the guide path (8).

9. System according to claim 8, **characterised in that** the guide path (8) has a tapered shape and the guided element (7) has a tapered shape which is designed to be inserted in the guide path (8).

10. System according to any one of claims 1 to 9, **characterised in that** it comprises a sliding ramp (36) of the headlight (2) beneath a dropped edge (35) of a wing (6) of the vehicle (1).

11. System according to claim 10, **characterised in that** the ramp (36) is fitted on the protective glass (3) of the headlight (2).

12. System according to claim 10, **characterised in that** the ramp (36) is secured to the case (30) of the headlight (2).

13. System according to claim 12, **characterised in that** a part (39) is placed at one end of the ramp (36).

14. System according to claim 10, **characterised in that** the ramp (36) is bevelled in the protective glass (3) of the headlight (2).

15. Motor vehicle comprising at least one headlight (2), **characterised in that** it comprises a system for fitting the headlight (2) according to any one of claims 1 to 14.

## Patentansprüche

1. System zur Montage eines Scheinwerfers (2) an einem Kraftfahrzeug (1), wobei der Scheinwerfer (2) ein durch eine Schutzscheibe (3) geschlossenes, starres Gehäuse (30) aufweist, und das System umfasst:
- ein erstes am Scheinwerfer (2) befestigtes Verbindungselement (7),
- ein zweites am Fahrzeug (1) befestigtes Verbindungselement (8),
- wobei das erste und das zweite Verbindungselement (7) und (8) ineinander gleitend zusammengefügt sind,
**dadurch gekennzeichnet, dass** das erste (7) und das zweite (8) Verbindungselement gebogen und wenigstens teilweise um ein Drehzentrum (9) des Scheinwerfers (2) herum montiert sind, wodurch eine Drehverschiebung des Scheinwerfers (2) bei einem Zusammenstoß gewährleistet ist.

2. System nach Anspruch 1,
**dadurch gekennzeichnet, dass** eine Position des Drehzentrums (9) des Scheinwerfers (2) in Abhängigkeit von einer Form der Schutzscheibe (3) des Scheinwerfers (2) bestimmt ist.

3. System nach einem der Ansprüche 1 oder 2,
**dadurch gekennzeichnet, dass** die Position des Drehzentrums (9) in Abhängigkeit von einer optimalen Position des Scheinwerfers (2) am Ende seiner Verschiebung bestimmt ist.

4. System nach einem der Ansprüche 1 bis 3,
**dadurch gekennzeichnet, dass** das Drehzentrum (9) des Scheinwerfers (2) auf den Schwerpunkt (17) des Scheinwerfers (2) zentriert ist.

5. System nach einem der Ansprüche 1 bis 4,
**dadurch gekennzeichnet, dass** das erste Verbindungselement (7) an einem Seitenbereich (5) des Scheinwerfers (2) befestigt ist.

6. System nach einem der Ansprüche 1 bis 5,
**dadurch gekennzeichnet, dass** das zweite Verbindungselement (8) einen Führungskanal bildet, und das erste Verbindungselement (7) ein durch den Führungskanal geführtes Element ist.

7. System nach Anspruch 6,
**dadurch gekennzeichnet, dass** der Führungskanal (8) und das geführte Element (7) wenigstens ein mechanisches Bremsmittel aufweisen.

8. System nach Anspruch 7,
**dadurch gekennzeichnet, dass** der Führungskanal (8) eine gezackte Form hat, und das geführte Element (7) eine T-Form aufweist, die sich sukzessiv zwischen die Zacken (27) des Führungskanals (8) einzuschieben vermag.

9. System nach Anspruch 8,
**dadurch gekennzeichnet, dass** der Führungskanal (8) eine spitz zulaufende Form hat, und das geführte Element (7) eine spitz zulaufende Form aufweist, die sich in den Führungskanal (8) einzuschieben vermag.

10. System nach einem der Ansprüche 1 bis 9,
**dadurch gekennzeichnet, dass** es eine Rampe (36) zum Gleiten des Scheinwerfers (2) unter eine Bördelung (35) eines Kotflügels (6) des Fahrzeugs (1) umfasst.

11. System nach Anspruch 10,
**dadurch gekennzeichnet, dass** die Rampe (36) an der Schutzscheibe (3) des Scheinwerfers (2) angebracht ist.

12. System nach Anspruch 10,
**dadurch gekennzeichnet, dass** die Rampe (36) am Gehäuse (30) des Scheinwerfers (2) befestigt ist.

13. System nach Anspruch 12,
**dadurch gekennzeichnet, dass** an einem Ende der Rampe (36) ein Teil (39) platziert ist.

14. System nach Anspruch 10,
**dadurch gekennzeichnet, dass** die Rampe (36) in der Schutzscheibe (3) des Scheinwerfers (2) facettiert ist.

15. Kraftfahrzeug mit wenigstens einem Scheinwerfer (2),
**dadurch gekennzeichnet, dass** er ein System zur Montage des Scheinwerfers (2) nach einem der Ansprüche 1 bis 14 umfasst.
